# EUROPÄISCHE PATENTSCHRIFT

(11) **EP 2 606 713 B1**
(45) Veröffentlichungstag und Bekanntmachung des Hinweises auf die Patenterteilung: **21.01.2015**
(21) Anmeldenummer: 12184934.3
(22) Anmeldetag: 19.09.2012
(51) Int. Cl.: A01F 12/30

(54) **Abscheidevorrichtung für einen Mähdrescher**
Separation device for a combine harvester
Dispositif de séparation pour une moissonneuse-batteuse

(30) Priorität: 19.12.2011 DE 102011056607
(43) Veröffentlichungstag der Anmeldung: 26.06.2013
(73) Patentinhaber: CLAAS Selbstfahrende Erntemaschinen GmbH, 33428 Harsewinkel (DE)
(72) Erfinder: Niehüser, Wilhelm, 33449 Langenberg (DE)

(56) Entgegenhaltungen:
- DE-A1- 3 441 238
- DE-U1- 8 100 584
- GB-A- 2 055 536

## Beschreibung

Die vorliegende Erfindung betrifft eine Abscheidevorrichtung für einen Mähdrescher gemäß dem Oberbegriff des Anspruches 1.

Eine Abscheidevorrichtung der eingangs genanten Art ist hinlänglich aus dem Stand der Technik bekannt. Beispielhaft wird die DE 34 41 238 A1 genannt, die eine oszillierend angetriebene Abscheidevorrichtung an einem Mähdrescher zeigt, die aus einer Mehrzahl von nebeneinander angeordneten, aus mehreren Stufen gebildeten Hordenschüttlern besteht. Der jeweilige Hordenschüttler weist siebartige Beläge auf, die jeweils zwischen seitlichen Begrenzungen, sogenannten Schüttlerkämmen, die Beläge überragend angeordnet sind. Im Bereich mindestens einer Fallstufe des Hordenschüttlers ist oberhalb der Schüttlerkämme eine Vorrichtung zur Intensivierung der Kornabscheidung angeordnet, eine sogenannte Schüttlerhilfe, die aus mehreren schwingfähigen Lockerungsstäben besteht und die das auf der Abscheidevorrichtung befindliche Erntegut einer zusätzlichen Auflockerung unterzieht.

Derartigen, oberhalb der Schüttlerkämme angeordneten Schüttlerhilfen ist gemein, dass sie in den Gutfluss der sich auf der Abscheidevorrichtung aufbauenden Gutmatte einwirken. Der Bereich zwischen den Schüttlerkämmen, in dem sich insbesondere durch Kurzstroh eine Strohmatte ausbildet, die die Durchgängigkeit von aus dem auf der Abscheidevorrichtung befindlichen Erntegutstrom ausgeschiedenen Korn durch die siebartigen Beläge einschränkt.

Aufgabe der vorliegenden Erfindung ist es, eine Abscheidevorrichtung für einen Mähdrescher der eingangs genannten Art bereit zu stellen, die den Prozess der Abscheidung auf den Hordenschüttlern unterstützt, insbesondere im Bereich zwischen den Schüttlerkämmen.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß Anspruch 1 wird vorgeschlagen, dass auf der Oberfläche des Belages zumindest einer Stufe des jeweiligen Hordenschüttlers wenigstens ein elastisches Element aufliegt, welches mit zumindest einem Ende an dem Hordenschüttler befestigt ist und im Übrigen auf der Oberfläche des Belages freibeweglich aufliegt, und dass das wenigstens eine elastische Element durch die Bewegung der Abscheidevorrichtung zur Ausführung einer oszillierenden Bewegung anregbar ist. Das wenigstens eine elastische, auf der Oberfläche des Belages zumindest einer Stufe aufliegende Element hat den Vorteil, dass eine sich auf den Belägen ausbildende Kurzstrohmatte durch die Bewegung des Elemente aufgelockert wird, wodurch ein Zusetzten der Öffnungen der Beläge weitgehend vermieden oder zumindest reduziert wird. Dadurch wird erreicht, dass die siebartigen Beläge der Hordenschüttler für den Durchtritt der abzuscheidenden Körner frei bleibt.

Vorzugsweise kann sich das Element im Wesentlichen parallel zur Längsachse der Stufe erstrecken. Auf diese Weise lässt sich bereits mit nur einem Element je Stufe ein größtmöglicher Effekt bei der Auflösung der Kurzstrohmatte auf den Belägen erreichen.

Dabei sollte sich das Element zumindest über die halbe Länge des Belages einer Stufe erstrecken, um eine hinreichende Wirkung bei der Auflockerung der Kurzstrohmatte zu erzielen.

Dabei kann das Element mit seinem zumindest einen der Befestigung dienenden Ende an einer sich im Wesentlichen senkrecht zu einer Stufe erstreckenden Stirnwand einer in Längsrichtung der Hordenschüttlers gesehen benachbarten Stufe angeordnet sein.

Alternativ kann das Element mit seinem zumindest einen der Befestigung dienenden Ende auf dem Belag der Stufe angeordnet sein.

Vorzugsweise kann das Element als ein elastischer Riemen ausgeführt sein. Dabei kann der Riemen eine strukturierte Oberfläche aufweisen, durch die das Auflockern beziehungsweise auflösen der Kurzstrohmatte auf dem Belag begünstigt wird. Alternativ kann das Element als eine Kette ausgeführt sein oder aus einem Federstahl bestehen, die, wie weiter oben bereits beschrieben, entsprechend auf einer Stufe des Hordenschüttlers angeordnet sind.

In bevorzugter Weiterbildung kann vorgesehen sein, dass das Element an einer senkrecht zur Oberfläche des Belages angeordneten, bezüglich des Belages feststehenden Achse angeordnet ist, an welcher sich das Element auf und ab bewegbar ist. Hierdurch kann eine Ansammlung von Erntegut im Bereich der der Befestigung des elastischen Elementes dienenden Endes vermieden werden.

Vorliegende Erfindung wird nachfolgend anhand von in den Zeichnungen dargestellten Ausführungsbeispielen näher erläutert.

Es zeigen:
- Fig. 1: eine Seitenansicht eines Mähdreschers;
- Fig. 2a: eine Draufsicht auf einen Hordenschüttler;
- Fig. 2b: eine Schnittansicht gemäß Figur 2a des Hordenschüttlers;
- Fig. 3a: eine Draufsicht auf einen Hordenschüttler mit einer zweiten Ausführungsform des elastischen Elementes;
- Fig. 3b: eine Schnittansicht gemäß Figur 3a.

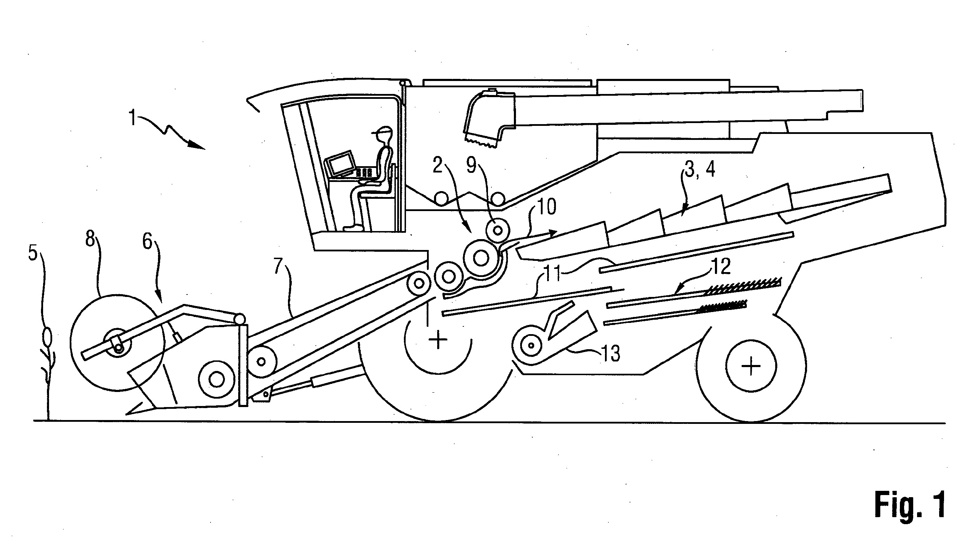

Die Darstellung in Figur 1 zeigt eine Seitenansicht eines Mähdreschers 1, mit einem sogenannten Tangentialdreschwerk 2 und einer diesem nachgeordneten Abscheidevorrichtung 3, die als Hordenschüttler 4 ausgeführt ist. Das Erntegut 5 wird von einem Schneidwerk 6 mit Haspel 7 aufgenommen, welches das Erntegut 5 einem Schrägförderer 8 zuführt. Der Schrägförderer 8 übergibt das Erntegut 5 an das Tangentialdreschwerk 2, welches das zugeführte Erntegut 5 mechanisch bearbeitet. Von dem Tangentialdreschwerk 2 gelangt eine im Wesentlichen aus gedroschenen Halmen bestehender Gutstrom 10 über eine Wendetrommel 9 auf den Hordenschüttler 4, welcher den Gutstrom 10 in den rückwärtigen Bereich des Mähdreschers 1 gefördert. Unterhalb des Hordenschüttlers 4 sind Förderböden 11 angeordnet, die den von dem Hordenschüttler 4 abgeschiedenen Erntegutstrom aus Korn, Spreu und Kurzstroh auffangen und an eine Reinigungsvorrichtung 12 übergeben. Der Reinigungsvorrichtung 12 ist ein Gebläse 13 zugeordnet, um Separierprozess der Reinigungsvorrichtung 12 zu unterstützen. Dabei werden die noch in dem Gutstrom 10 enthaltenen Körner sowie eventuell Kurzstroh und Spreu abgetrennt.

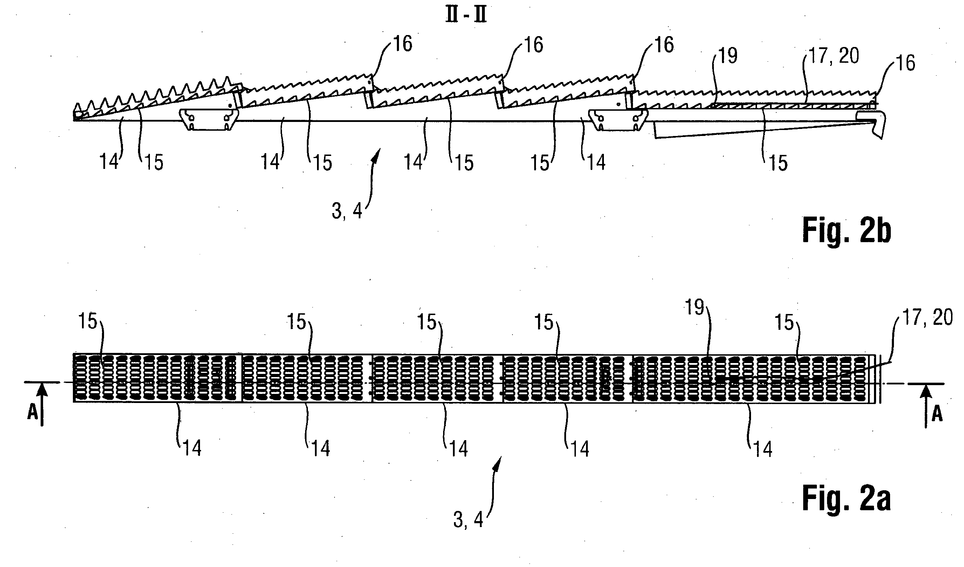

Die Darstellungen in den Figuren 2a, 2b zeigen einen Hordenschüttler 4 der aus mehreren Stufen 14 gebildet wird. Jede Stufe 14 weist einen siebförmigen Belag 15 auf, der dem Durchtritt von Korn dient, welches aus dem von dem Hordenschüttler 4 transportierten Stroh abgeschieden wird. Das Abscheiden des Korns aus dem Stroh geschieht durch eine im Hordenschüttler 4 aufgeprägte oszillierende Schwingung, die einerseits das Stroh auf dem Hordenschüttler 4 auflockert, und andererseits dem Transport des Strohs in Richtung des endseitigen Bereiches des Mähdreschers 1 dient, um das Stroh dort auszubringen. Wie aus der Schnittansicht des Hordenschüttlers 4 gemäß 2b ersichtlich ist, ist der Belag 15 einer jeden Stufe 14 zwischen zwei Schüttlerkämmen 16 angeordnet, die die jeweiligen Beläge 15 abschnittsweise überragen. Wie weiterhin aus der Darstellung der Figur 2a ersichtlich ist, ist auf zumindest einer der Stufen 14 zumindest ein elastisches Element 17 vorgesehen, welches sich zumindest über die halbe Länge des Belages 15 der Stufe 14 erstreckt. Die Anordnung des wenigstens einen elastischen Elementes 17 ist derart gewählt, dass es sich im Wesentlichen parallel zur Längsachse der Stufe 14 erstreckt. Das elastische Element 17 ist mit zumindest einem der Befestigung dienenden Ende 19 im Wesentlichen mittig auf dem Belag 15 der Stufe 14 angeordnet; es kann aber auch an beliebiger Stelle auf dem Belag 15 und/oder beidendig an diesem befestigbar sein. Bei einer beidendigen Befestigung des elastischen Elementes 17 an dem Hordenschüttler 4 weist das elastische Element 17 eine Länge auf, die über den Abstand der Befestigungspunkte hinaus geht, so dass das elastische Element 17 hinreichend auf dem Belag 15 schwingen kann.

Bei dem dargestellten elastischen Element 17 kann es sich um einen Riemen 20 handeln, der vorzugsweise aus einem Kunststoff besteht. Das elastische Element 17 liegt unmittelbar auf der Oberfläche des Belages 15 auf, um die sich auf dem Belag 15 ausbildende Kurzstrohmatte auflockern oder auflösen zu können. Da das elastische Element 17 einem Verschleiß unterliegt, ist es lösbar an dem Belag 15 befestigt. Die Oberfläche des als Riemen 20 ausgeführten elastischen Elementes 17 kann strukturiert ausgeführt sein, um das Auflösen der Auflockern der Kurzstrohmatte auf dem Belag 15 zu begünstigen. Das Auflösen beziehungsweise Auflockern der Kurzstrohmatte auf dem Belag 15 wird durch eine um den Befestigungspunkt sowohl in vertikaler als auch horizontaler Richtung schwingende Bewegung erreicht, wodurch das elastische Element 17 über die Oberfläche des Belages 15 hin- und hergleitet und zudem von der Oberfläche des Belages 15 abgehoben und wieder auf diese zurückfällt.

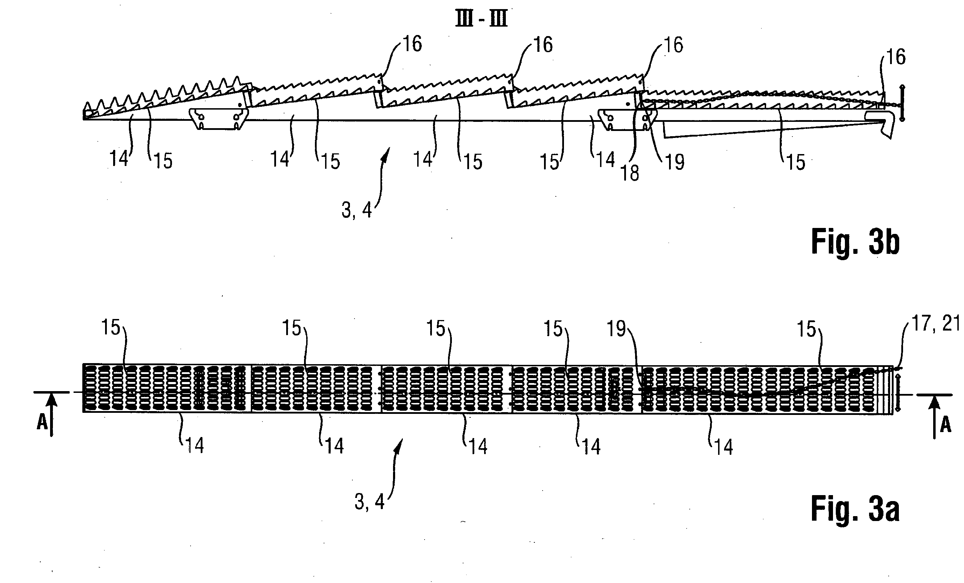

Die Darstellung in den Figuren 3a und 3b zeigt eine alternative Ausführungsform des elastischen Elementes 17 und dessen Befestigung an dem Hordenschüttler 4. Gemäß dieser ist das elastische Element 17 als eine Kette 20 ausgeführt, die mit ihrem der Befestigung dienenden Ende 19 an einer sich im Wesentlichen senkrecht zu der Stufe 14 erstreckenden Stirnwand 18 einer in Längserstreckung des Hordenschüttlers 4 gesehen benachbarten Stufe 14 angeordnet ist. Die Glieder der Kette 20 können aus Metall oder Kunststoff bestehen. Die Befestigung der Kette 20 erfolgt ebenfalls lösbar an der Stirnwand 18 einer jeweiligen Stufe 14.

Eine weitere alternative Ausführungsform des elastischen Elementes 17 besteht in dessen Ausführung aus einem Federstahl, welches, angeregt durch die oszillierende Bewegung des Hordenschüttlers 4, die Kurzstrohmatte auf der jeweiligen Stufe 14 des Hordenschüttlers 4 durch eine um die Längsachse des Hordenschüttlers 4 in horizontaler und vertikaler Richtung schwingende Bewegung auflösen kann. Hierbei kann vorgesehen sein, dass das aus dem Federstahl bestehende Element 17 an einer senkrecht zur Oberfläche des Belages 15 angeordneten, bezüglich des Belags 15 feststehenden Achse angeordnet ist, an welcher sich das Element auf und ab bewegen kann. Diese Variante kann auch bei einem Einsatz eines elastischen Elementes 17 in Form des Riemens 20 oder der Kette 21 vorgesehen sein. Diese Ausführung hat den Vorteil, dass sich am Befestigungspunkt kein Erntegut ablagert.

### Bezugszeichenliste

- 1: Mähdrescher
- 2: Tangentialdreschwerk
- 3: Abscheidevorrichtung
- 4: Hordenschüttler
- 5: Erntegut
- 6: Schneidwerk
- 7: Schrägförderer
- 8: Haspel
- 9: Wendetrommel
- 10: Erntegutstrom
- 11: Förderböden
- 12: Reinigung
- 13: Gebläse
- 14: Stufe
- 15: Belag
- 16: Schüttlerkamm
- 17: elastisches Element
- 18: Stirnwand
- 19: Befestigungsende des Elementes 17
- 20: Riemen
- 21: Kette

## Patentansprüche

1. Abscheidevorrichtung (3) für einen Mähdrescher (1), welche aus einer Mehrzahl von nebeneinander angeordneten, aus mehreren Stufen (14) gebildeten Hordenschüttlern (4) besteht, deren Stufen (14) jeweils einen Belag (15) aufweisen, der zwischen zwei den Belag (15) abschnittsweise überragenden Schüttlerkämmen (16) angeordnet ist, und das der Belag (15) eine mit Durchtrittsöffnungen versehene Oberfläche zur Abscheidung von Körnern aus einem Korn-Stroh-Gemisch aufweist,
**dadurch gekennzeichnet,**
**dass** auf der Oberfläche des Belages (15) zumindest einer Stufe (14) des jeweiligen Hordenschüttlers (4) wenigstens ein elastisches Element (17) aufliegt, welches mit einem Ende (19) an dem Hordenschüttler (4) befestigt ist und im Übrigen auf der Oberfläche des Belages (15) frei beweglich aufliegt, und dass das wenigstens eine elastische Element (17) durch die Bewegung der Abscheidevorrichtung (3) zur Ausführung einer oszillierenden Bewegung anregbar ist.

2. Abscheidevorrichtung (3) nach Anspruch 1, **dadurch gekennzeichnet, dass** sich das elastische Element (17) im Wesentlichen parallel zur Längsachse zur Stufe (14) erstreckt.

3. Abscheidevorrichtung (3) nach einem der Ansprüche 1 oder 2, **dadurch gekennzeichnet, dass** sich das elastische Element (17) zumindest über die halbe Länge des Belages (15) einer Stufe (14) erstreckt.

4. Abscheidevorrichtung (3) nach einem der Ansprüche 1 bis 3, **dadurch gekennzeichnet, dass** das Element (17) mit seinem der Befestigung dienendem Ende (19) an einer sich im Wesentlichen senkrecht zu einer Stufe (14) erstreckenden Stirnwand (18) einer in Längserstreckung des Hordenschüttlers (4) gesehen benachbarten Stufe (14) angeordnet ist.

5. Abscheidevorrichtung (3) nach einem der Ansprüche 1 bis 3, **dadurch gekennzeichnet, dass** das Element (17) mit seinem zumindest einen der Befestigung dienenden Ende (19) auf dem Belag (15) der Stufe (14) angeordnet ist.

6. Abscheidevorrichtung (3) nach einem der Ansprüche 1 bis 5, **dadurch gekennzeichnet, dass** das Element (17) als ein Riemen (20) ausgeführt ist.

7. Abscheidevorrichtung (3) nach einem der Ansprüche 1 bis 5, **dadurch gekennzeichnet, dass** das Element (17) als eine Kette (21) ausgeführt ist.

8. Abscheidevorrichtung (3) nach einem der Ansprüche 1 bis 5, **dadurch gekennzeichnet, dass** das Element (17) aus einem Federstahl besteht.

9. Abscheidevorrichtung (3) nach einem der Ansprüche 1 bis 8, **dadurch gekennzeichnet, dass** das Element (17) lösbar an der Abscheidevorrichtung (3) befestigt ist.

10. Abscheidevorrichtung (3) nach einem der Ansprüche 1 bis 9, **dadurch gekennzeichnet, dass** das Element (17) an einer senkrecht zur Oberfläche des Belages (15) angeordneten, bezüglich des Belags (15) feststehenden Achse angeordnet ist, an welcher sich das Element (17) auf und ab bewegbar ist.

## Claims

1. A separating apparatus (3) for a combine harvester (1), which comprises a plurality of mutually juxtaposed straw walkers (4) formed from a plurality of stages (14), the stages (14) thereof each having a respective lining (15) arranged between two walker combs (16) projecting portionwise beyond the lining (15), and the lining (15) has a surface provided with through openings for the separation of grains from a grain-straw mixture
**characterised in that**
at least one elastic element (17) lies on the surface of the lining (15) of at least one stage (14) of the respective straw walker (4), which element is fixed with one end (19) to the straw walker (4) and otherwise rests freely moveably on the surface of the lining (15), and the at least one elastic element (17) can be induced to perform an oscillating movement by the movement of the separating apparatus (3).

2. A separating apparatus (3) according to claim 1 **characterised in that** the elastic element (17) extends substantially parallel to the longitudinal axis of the stage (14).

3. A separating apparatus (3) according to one of claims 1 and 2 **characterised in that** the elastic element (17) extends at least over half the length of the lining (15) of a stage (14).

4. A separating apparatus (3) according to one of claims 1 to 3 **characterised in that** at its end (19) serving for fixing the element (17) is arranged at an end wall (18), extending substantially perpendicularly to a stage (14), of an adjacent stage (14) as viewed in the longitudinal extent of the straw walker (4).

5. A separating apparatus (3) according to one of claims 1 to 3 **characterised in that** at its at least one end (19) serving for fixing the element (17) is arranged on the lining (15) of the stage.

6. A separating apparatus (3) according to one of claims 1 to 5 **characterised in that** the element (17) is in the form of a belt (20).

7. A separating apparatus (3) according to one of claims 1 to 5 **characterised in that** the element (17) is in the form of a chain (21).

8. A separating apparatus (3) according to one of claims 1 to 5 **characterised in that** the element (17) comprises a spring steel.

9. A separating apparatus (3) according to one of claims 1 to 8 **characterised in that** the element (17) is fixed releasably to the separating apparatus (3).

10. A separating apparatus (3) according to one of claims 1 to 9 **characterised in that** the element (17) is arranged at an axis member which is arranged perpendicularly relative to the surface of the lining (15) and which is stationary with respect to the lining (15) and at which the element (17) is moveable up and down.

## Revendications

1. Dispositif de séparation (3) pour une moissonneuse-batteuse (1), lequel se compose d'une pluralité de secoueur à claies (4) disposés côte à côte et formés de plusieurs étages (14), dont les étages (14) présentent chacun une garniture (15) qui est disposée entre deux peignes de secoueur (16) débordant par endroits de la garniture (15), la garniture (15) présentant une surface pourvue d'ouvertures de passage pour la séparation des grains d'un mélange grains-paille, **caractérisé en ce que** sur la surface de la garniture (15) d'au moins un étage (14) du secoueur à claies (4) respectif repose au moins un élément élastique (17) qui est fixé par une extrémité (19) au secoueur à claies (4) et pour le reste repose sur la surface de la garniture (15) de manière à pouvoir se mouvoir librement, et **en ce que** ledit au moins un élément élastique (17) peut effectuer un mouvement oscillatoire excité par le mouvement du dispositif de séparation (3).

2. Dispositif de séparation (3) selon la revendication 1, **caractérisé en ce que** l'élément élastique (17) s'étend sensiblement parallèlement à l'axe longitudinal de l'étage (14).

3. Dispositif de séparation (3) selon l'une des revendications 1 ou 2, **caractérisé en ce que** l'élément élastique (17) s'étend au moins sur la moitié de la longueur de la garniture (15) d'un étage (14).

4. Dispositif de séparation (3) selon l'une des revendications 1 à 3, **caractérisé en ce que**, par son extrémité (19) servant à la fixation, l'élément (17) est disposé contre une paroi frontale (18) d'un étage (14) adjacent vu dans la direction longitudinale du secoueur à claies (4), laquelle paroi frontale s'étend sensiblement perpendiculairement à un étage (14).

5. Dispositif de séparation (3) selon l'une des revendications 1 à 3, **caractérisé en ce que** l'élément (17) est disposé sur la garniture (15) de l'étage (14) par sa au moins une extrémité (19) servant à la fixation.

6. Dispositif de séparation (3) selon l'une des revendications 1 à 5, **caractérisé en ce que** l'élément (17) est réalisé sous la forme d'une courroie (20).

7. Dispositif de séparation (3) selon l'une des revendications 1 à 5, **caractérisé en ce que** l'élément (17) est réalisé sous la forme d'une chaîne (21).

8. Dispositif de séparation (3) selon l'une des revendications 1 à 5, **caractérisé en ce que** l'élément (17) est réalisé dans un acier à ressorts.

9. Dispositif de séparation (3) selon l'une des revendications 1 à 8, **caractérisé en ce que** l'élément (17) est fixé de manière détachable au dispositif de séparation (3).

10. Dispositif de séparation (3) selon l'une des revendications 1 à 9, **caractérisé en ce que** l'élément (17) est disposé contre un axe qui est fixe par rapport à la garniture (15), qui est perpendiculaire à la surface de la garniture (15) et contre lequel l'élément (17) peut se déplacer vers le haut et vers le bas.
